# EUROPÄISCHE PATENTSCHRIFT

(11) **EP 1 424 384 B1**
(45) Veröffentlichungstag und Bekanntmachung des Hinweises auf die Patenterteilung: **08.06.2005**
(21) Anmeldenummer: 03024642.5
(22) Anmeldetag: 27.10.2003
(51) Int. Cl.: C12C 1/16, C12C 1/02

(54) **Nassschrotmühle und Verfahren zur Nassschrotung**
Mill and method for wet grinding
Appareil et procédé de moulage humide

(30) Priorität: 27.11.2002 DE 10255504
(43) Veröffentlichungstag der Anmeldung: 02.06.2004
(73) Patentinhaber: Huppmann GmbH, 97318 Kitzingen (DE)
(72) Erfinder: Lenz, August, 97318 Kitzingen (DE); Kantelberg, Bernd, 97332 Volkach (DE)
(74) Vertreter: Böck, Bernhard, Dipl.-Ing.

(56) Entgegenhaltungen:
- EP-A- 0 200 165
- DE-A- 10 218 424
- DE-A- 19 715 210
- DE-B- 1 092 420
- DE-C- 19 740 209

## Beschreibung

Die Erfindung betrifft ein Verfahren zur Nassschrotung und eine Nassschrotmühle nach dem Oberbegriff der unabhängigen Hauptansprüche.

Das Maischen des Malzes ist einer der grundlegenden Verfahrensschritte während des Brauprozesses zur Herstellung von Bier. Beim Maischen müssen die Enzyme die Möglichkeit haben, an die Inhaltstoffe des Malzes heranzukommen, um sie abzubauen. Dazu muss das Malz vor dem Maischen zerkleinert werden. Zum Zerkleinern des Malzes sind sogenannte Trockenschrotmühlen bekannt, bei denen das trockene Malz mit geeigneten Walzen zerkleinert wird. Alternativ dazu werden heute zunehmend Nassschrotmühlen eingesetzt, bei denen das Malz bereits vor der Zerkleinerung durch die Zugabe von Wasser konditioniert wird. Durch die Zugabe von Wasser wird nämlich das Malz vor dem Schroten geweicht, da die Spelzen Feuchtigkeit aufnehmen und dadurch elastisch werden. Auf diese Weise kann durch die Nassschrotung die bei der Trockenschrotung mehr oder weniger auftretende Beschädigung der Spelzen verringert bzw. vermieden werden, so dass die Filterfunktion der Spelzen beim späteren Abläutern verbessert wird.

Anders als beim Trockenschroten wird das Malz bei der Nassschrotung nicht einfach nur zerkleinert, sondern vielmehr der Malzinhalt aus den Spelzen herausgequetscht. In bekannten Nassschrotmühlen sind für diese Aufgabe paarweise angeordnete Quetschwalzen vorgesehen, die gegenläufig angetrieben werden. Die Quetschwalzen sind dabei derart in der Nassschrotmühle gelagert, dass zwischen ihnen ein Spalt gebildet wird, durch den die Malzkörner hindurchgefördert werden, wobei der Malzinhalt aus den Spelzen herausgequetscht wird.

Bei bekannten Nassschrotmühlen ist die Spaltweite nach unten begrenzt. So wird beispielsweise in dem Fachbuch "Technologie Brauer und Mälzer", VEB Berlin, 8. Auflage, 1998, auf Seite 201 beschrieben, dass das Quetschwalzenpaar mit einem sehr engen Walzenabstand von 0,45 mm eingestellt ist. Auch in dem Fachbuch Narziss, "Die Bierbrauerei. Die Technologie der Würzebereitung", Enke Verlag, 7. Auflage, 1992, wird der Walzenabstand zwischen den Walzen mit 0,35 bis 0,4 mm als geeignet angegeben.

Das Dokument DE19715210 offenbart eine Nassschrotmühle zur Bereitung von Biermaische, bei der die Spaltbreite des Mahlspaltes zwischen zwei Mahlwalzen einstellbar ist.

Nachteilig an bekannten Nassschrotmühlen ist es, dass die Spaltweite nach unten begrenzt ist. Im Hinblick auf verschiedene technologische Eigenschaften des Brauprozesses wäre nämlich eine engere Spaltweite als die bisher bekannten Spaltweiten im Bereich von 0,35 bis 0,45 mm im Hinblick auf eine höhere Ausbeute sehr wünschenswert. Versuche mit Nassschrotmühlen, bei denen eine Spaltweite von kleiner 0,35 mm eingestellt wurde, haben jedoch gezeigt, dass durch die Verringerung der Spaltweite das Mahlergebnis und das Ergebnis des mit diesem Malz hergestellten Suds verschlechtert wurde.

Aufgabe der vorliegenden Erfindung ist es deshalb, eine Nassschrotmühle und ein Verfahren zur Nassschrotung vorzuschlagen, mit dem das Ergebnis der Nassschrotung und die im Sudprozess erreichbaren technologischen Eigenschaften verbessert werden können.

Bei der Untersuchung des oben beschriebenen Problems wurde festgestellt, dass durch die Verringerung der Spaltweite die Leistungsaufnahme der zum Antrieb der Quetschwalzen üblicherweise vorgesehenen einfachen Elektromotoren stark ansteigt. Diese stark zunehmende Leistungsaufnahme führt dazu, dass die von den Antriebsmotoren an den Quetschwalzen hervorgerufene Drehzahl um den vorgegebenen gemeinsamen Sollwert schwankt bzw. vom Sollwert leicht abweicht. Die Schwankung bzw. Abweichung vom Sollwert ist dabei umso größer, je kleiner die Spaltweite gewählt wird. Dass die Ist-Drehzahl der Quetschwalzen vom vorgegebenen Sollwert leicht abweicht bzw. um den Sollwert pendelt, ist an sich von geringer Bedeutung. Problematisch ist jedoch durch die an den beiden Quetschwalzen jeweils unabhängig voneinander auftretenden Abweichungen bzw. Schwankungen, dass die Quetschwalzen aus diesem Grund nicht mehr mit der exakt gleichen vorgegebenen Drehzahl angetrieben werden. Der Drehzahlunterschied führt im Ergebnis zu einem gewissen Schlupf zwischen den Quetschwalzen, was dann beim Nassschroten mit kleinen Spaltweiten zu ungenügenden Schrotungsergebnissen führt. Denn die Malzkörner werden beim Nassschroten mit sehr enger Spaltweite starken Drücken ausgesetzt, so dass die Schlupfbewegung der Quetschwalzen zu einer unerwünschten Beschädigung der Spelzen führt. Das Maß der Beschädigung der Spelzen steigt dabei exponentiell mit der Verkleinerung des Spaltes an, weshalb Spaltweiten unterhalb von 0,35 mm bisher als nicht machbar galten.

Erfindungsgemäß werden beim Nassschroten mit einer Spaltweite von kleiner 0,3 mm die Quetschwalzen mit exakt gleicher Drehzahl angetrieben. Durch die Einhaltung der exakt gleichen Drehzahl wird ausgeschlossen, dass es zwischen den Quetschwalzen eine Schlupfbewegung gibt, die zur Beschädigung der Spelzen führt. Gleichzeitig werden sehr gute Sudergebnisse im Hinblick auf die Materialausbeute bei Verwendung von erfindungsgemäß nassgeschrotetem Malz erreicht.

Damit die Spaltweite möglichst exakt dem vorgegebenen Sollwert entspricht, sollte in der Nassschrotmühle ein Sensor vorgesehen sein, mit dem die Ist-Spaltweite gemessen werden kann. Im Ergebnis ist es dadurch möglich, die Ist-Spaltweite jederzeit zu überprüfen und gegebenenfalls an die vorgegebene Soll-Spaltweite anzupassen.

Die Spaltweite kann entlang der Längsachse des Spaltes innerhalb bestimmter Grenzen variieren. Derartige Abweichungen der Spaltweite entlang der Längsachse des Spaltes können durch Abweichungen der Walzenkörper von einer idealzylindrischen Form, beispielsweise hervorgerufen durch unterschiedlich starken Verschleiß oder eine Durchbiegung des Walzenkörpers in der Mitte, hervorgerufen sein. Es ist deshalb besonders vorteilhaft, wenn die Spaltweite an mehreren Stellen des Spalts entlang seiner Längsachse gemessen wird und aus diesen Messwerten ein Mittelwert berechnet wird. Dieser Mittelwert kann dann als Ist-Spaltweite an die Anlagensteuerung weitergeleitet werden.

Zur Realisierung des Antriebs der Quetschwalzen mit exakt gleicher Drehzahl sind verschiedene Konstruktionsprinzipien denkbar. Nach einer ersten Ausführungsvariante werden beide Quetschwalzen durch nur einen gemeinsamen Antriebsmotor angetrieben. Um beide Quetschwalzen dann mit exakt gleicher Drehzahl anzutreiben, ist zudem ein Verteilgetriebe vorgesehen, dass die vom Antriebsmotor abgegebene Antriebsbewegung auf die beiden Quetschwalzen mit gleicher Drehzahl überträgt. Eine besondere Ausführungsform dieses Antriebskonzeptes mit nur einem Antriebsmotor ist es, wenn der Antriebsmotor die eine Quetschwalze direkt antreibt und die Antriebsbewegung mittels des Verteilgetriebes dann von dieser Quetschwalze auf die zweite Quetschwalze übertragen wird. Das Verteilgetriebe sollte dabei möglichst steif ausgebildet sein, damit es nicht zu Drehzahldifferenzen kommt.

Nach einem alternativen Antriebskonzept werden beide Quetschwalzen unabhängig voneinander von jeweils einem eigenen Antriebsmotor angetrieben. Diese Antriebsmotoren sind dabei als regelbare Antriebsmotoren, beispielsweise als Servomotoren, ausgebildet, so dass die beiden Antriebsmotoren von einer Regeleinrichtung exakt auf einen gemeinsamen Sollwert geregelt werden können. Durch den Einsatz solcher moderner Servomotoren ist es außerdem möglich, besondere Bewegungskinematiken durch Vorgabe der entsprechenden Regelungssoftware zu realisieren. So sind beispielsweise winkel-, geschwindigkeits- und/oder beschleunigungsabhängige Bewegungskurven beim Antrieb der Quetschwalzen denkbar.

Verschiedene Ausführungsformen der Erfindung sind in den Zeichnungen schematisch dargestellt und werden nachfolgend beispielhaft erläutert.

Es zeigen:
- **Fig. 1**: eine Nassschrotmühle mit zwei Quetschwalzen im Querschnitt;
- **Fig. 2**: eine erste Ausführungsform zum Antrieb der Quetschwalzen in der Nassschrotmühle gemäß **Fig. 1;**
- **Fig. 3**: eine zweite Ausführungsform zum Antrieb der Quetschwalzen in der Nassschrotmühle gemäß **Fig. 1.**

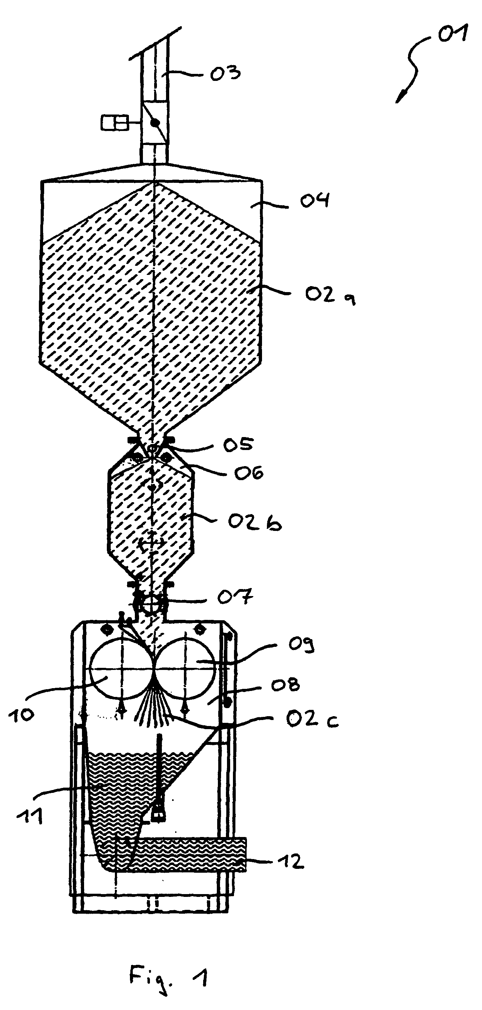

In **Fig. 1** ist eine Nassschrotmühle 01 zur Nassschrotung von Braumalz 02 im Querschnitt dargestellt. Das trockene Braumalz 02a wird über eine Leitung 03 aus einem nicht dargestellten Lagersilo in den Malzrumpf 04 der Nassschrotmühle 01 eingefördert. Mittels einer Speisewalze 05 erfolgt dann die Förderung des Braumalzes 02 in den zur Weichung des trockenen Braumalzes 02a vorgesehenen Weichrumpf 06. Im Weichrumpf 06 wird dem durchlaufenden Braumalz 02 kontinuierlich Wasser beigemengt, damit die Malzkörner Feuchtigkeit aufnehmen und dadurch aufweichen.

Mittels einer weiteren Speisewalze 07 wird das geweichte Braumalz 02b in den Mühlenkörper 08 eingefördert. Im Mühlenkörper 08 sind zwei Quetschwalzen 09 und 10 drehbar gelagert und können durch eine in **Fig. 1** nicht dargestellte Antriebseinrichtung gegenläufig angetrieben werden. Durch den gegenläufigen Antrieb der Quetschwalzen 09 und 10 wird das geweichte Braumalz 02b durch den von den Quetschwalzen 09 und 10 gebildeten Spalt durchgequetscht und dabei zerkleinert. Das zerkleinerte Braumalz 02c fällt anschließend in den darunter liegenden Maischesumpf 11 und wird von dort durch eine Maischleitung 12 mittels einer nicht dargestellten Maischepumpe in ein nicht dargestelltes Maischgefäß übergepumpt.

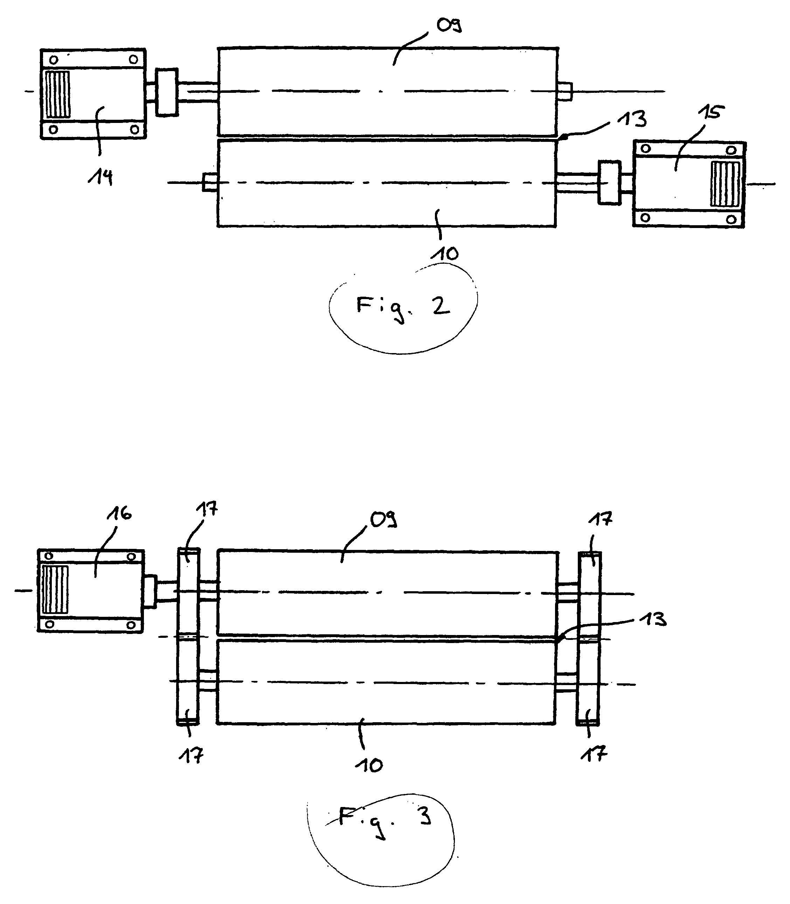

In **Fig. 2** ist ein erstes Antriebskonzept zum erfindungsgemäßen Antrieb der Quetschwalzen 09 und 10 schematisch dargestellt. Man erkennt in der Draufsicht von oben auf die beiden Quetschwalzen 09 und 10 den dazwischen gebildeten Spalt 13, durch den die Malzkörner durchgefördert werden. Der Spalt 13 wird mit einer Spaltweite von kleiner 0,3 mm eingestellt. Zum Antrieb der Quetschwalzen 09 und 10 ist bei dem in **Fig. 2** dargestellten Antriebskonzept jeweils ein eigener regelbarer Antriebsmotor 14 und 15 vorgesehen, die beispielsweise in der Art von Servomotoren mit Drehwinkelregelung ausgebildet sein können. Beide regelbaren Antriebsmotoren 14 und 15 sind mit einer nicht dargestellten Regeleinrichtung verbunden und werden auf eine gemeinsame Soll-Drehzahl geregelt, so dass bei einem Antrieb der Quetschwalzen 09 und 10 kein Drehzahlschlupf auftritt.

In **Fig. 3** ist ein zweites, alternatives Antriebskonzept zum Antrieb der Quetschwalzen 09 und 10 schematisch dargestellt. Zum Antrieb der Quetschwalzen 09 und 10 ist lediglich ein Antriebsmotor 16 vorgesehen, der auf eine ausreichende Leistungsfähigkeit im Hinblick auf den Antrieb der beiden Quetschwalzen 09 und 10 dimensioniert sein muss. Der Antriebsmotor 16 treibt die Quetschwalze 09 direkt an. Zur Übertragung der exakt gleichen Drehzahl von der Quetschwalze 09 auf die Quetschwalze 10 ist ein Verteilgetriebe vorgesehen, das im Wesentlichen aus vier Stirnrädern 17 besteht, die paarweise miteinander in Eingriff stehen. Die Stirnräder 17 haben alle den gleichen Durchmesser, so dass dadurch die Drehzahl der Quetschwalze 09 exakt auf die Quetschwalze 10 übertragen wird. Durch die entsprechende Dimensionierung der Stirnräder 17 ist außerdem gewährleistet, dass es bei der Übertragung der Antriebsbewegung von der Quetschwalze 09 auf die Quetschwalze 10 nicht zu Drehzahldifferenzen kommt.

Alternativ zu den beiden in **Fig. 2** und **Fig. 3** dargestellten Antriebskonzepten sind selbstverständlich auch eine Vielzahl von anderen Antriebslösungen denkbar, mit denen eine exakt gleiche Drehzahl beim Antrieb der paarweise zugeordneten Quetschwalzen 09 und 10 gewährleistet werden kann.

## Patentansprüche

1. Verfahren zur Nassschrotung von Braumalz (02), bei dem das Braumalz (02) vor dem Schroten in Wasser geweicht wird und beim anschließenden Schroten mittels zumindest zweier rotierender Quetschwalzen (09, 10) gequetscht wird,
**dadurch gekennzeichnet,**
**dass** der Spalt (13) zwischen den beiden Quetschwalzen (09, 10) mit einer Spaltweite von kleiner 0,3 mm eingestellt ist, wobei die Quetschwalzen (09, 10) mit exakt gleicher Drehzahl angetrieben werden.

2. Verfahren nach Anspruch 1,
**dadurch gekennzeichnet,**
**dass** die Spaltweite 0,25 mm bis 0,20 mm beträgt.

3. Verfahren nach Anspruch 1 oder 2,
**dadurch gekennzeichnet,**
**dass** die Spaltweite an mehren Stellen, insbesondere drei Stellen, entlang des Spaltes (13) zwischen den Quetschwalzen (09, 10) gemessen und die Spaltweite als Mittelwert der Messwerte berechnet wird.

4. Nassschrotmühle (01) zur Nassschrotung von Braumalz (02), mit einer Weichvorrichtung (06), in der das Braumalz (02) in Wasser geweicht werden kann, und einer Walzenanordnung mit zumindest zwei antreibbaren Quetschwalzen (09, 10), die einen Spalt (13) bilden, zwischen denen das geweichte Braumalz (02) durch Antrieb der Quetschwalzen (09, 10) hindurch gequetscht werden kann,
**dadurch gekennzeichnet,**
**dass** zwischen den beiden Quetschwalzen (09, 10) eine Spaltweite von kleiner 0,3 mm eingestellt ist und die Quetschwalzen (09, 10) mit exakt gleicher Drehzahl angetrieben werden.

5. Nassschrotmühle nach Anspruch 4,
**dadurch gekennzeichnet,**
**dass** zur Messung der Spaltweite zumindest ein Sensor vorgesehen ist.

6. Nassschrotmühle nach Anspruch 4 oder 5,
**dadurch gekennzeichnet,**
**dass** die beiden Quetschwalzen (09, 10) durch einen Antriebsmotor (16) angetrieben werden, wobei die Antriebsbewegung des Antriebsmotors mittels eines Verteilgetriebes (17) mit exakt gleicher Drehzahl auf beide Quetschwalzen (09, 10) übertragen wird.

7. Nassschrotmühle nach Anspruch 6,
**dadurch gekennzeichnet,**
**dass** der Antriebsmotor (16) eine Quetschwalze (09) direkt antreibt und die Antriebsbewegung mittels des Verteilgetriebes (17) von der direkt angetriebenen Quetschwalze (09) auf die zweite Quetschwalze (10) übertragen wird.

8. Nassschrotmühle nach Anspruch 4 oder 5,
**dadurch gekennzeichnet,**
**dass** die beiden Quetschwalzen (09, 10) jeweils durch einen regelbaren Antriebsmotor (14, 15) angetrieben werden, wobei die Drehzahl der beiden Quetschwalzen (09, 10) mit einer Regeleinrichtung exakt auf einen gemeinsamen Sollwert geregelt wird.

## Claims

1. Method for wet crushing of brewing malt (02) wherein the brewing malt (02) is steeped in water before the crushing and during the subsequent crushing is squeezed by means of at least two rotating squeezing rollers (09, 10),
**characterised in**
**that** the gap (13) between the two squeezing rollers (09, 10) is adjusted with a gap width of less than 0.3 mm, wherein the squeezing rollers (09, 10) are driven at exactly the same speed.

2. The method according to claim 1,
**characterised in**
**that** the gap width is 0.25 mm to 0.20 mm.

3. The method according to claim 1 or 2,
**characterised in**
**that** the gap width is measured at a plurality of points, especially three points, along the gap (13) between the squeezing rollers (09, 10) and the gap width is calculated as the average of the measured values.

4. A wet crushing mill (01) for wet crushing of brewing malt (02), comprising a steeping device (06) in which the brewing malt (02) can be steeped in water and an arrangement of rollers comprising at least two drivable squeezing rollers (09, 10), which form a gap (13) between which the steeped brewing malt (02) can be squeezed through by driving the squeezing rollers (09, 10),
**characterised in**
**that** a gap width of less than 0.3 mm is adjusted between the two squeezing rollers (09, 10) and the squeezing rollers (09, 10) are driven at exactly the same speed.

5. The wet crushing mill according to claim 4,
**characterised in**
**that** at least one sensor is provided to measure the gap width.

6. The wet crushing mill according to claim 4,
**characterised in**
**that** the two squeezing rollers (09, 10) are driven by a drive motor (16) wherein the drive motion of the drive motor is transmitted by means of a distributor gear (17) to the two squeezing rollers (09, 10) at exactly the same speed.

7. The wet crushing mill according to claim 6,
**characterised in**
**that** the drive motor (16) directly drives a squeezing roller (09) and the drive motion is transmitted by means of the distributor gear (17) from the directly driven squeezing roller (09) to the second squeezing roller (10).

8. The wet crushing mill according to claim 4 or 5,
**characterised in**
**that** the two squeezing rollers (09, 10) are each driven by a controllable drive motor (14, 15) wherein the speed of the two squeezing rollers (09, 10) is regulated exactly to a common desired value using a regulating device.

## Revendications

1. Procédé de concassage humide de malt de brasserie (02), au cours duquel le malt de brasserie (02) est trempé dans de l'eau avant le concassage et lors du concassage consécutif, il est pressé à l'aide d'au moins deux rouleaux exprimeurs rotatifs (09, 10)
**caractérisé en ce que**
la fente (13) entre les deux rouleaux exprimeurs (09,10) est réglée à une largeur de fente inférieure à 0,3 mm, les rouleaux exprimeurs (09, 10) étant entraînés à une vitesse de rotation exactement identique.

2. Procédé selon la revendication 1,
**caractérisé en ce que**
la largeur de fente est comprise entre 0,25 mm et 0,20 mm.

3. Procédé selon la revendication 1 ou 2,
**caractérisé en ce que**
la largeur de fente est mesurée en plusieurs endroits, notamment en trois endroits, le long de la fente (13) entre les rouleaux exprimeurs (09, 10) et la largeur de fente est calculée en tant que valeur moyenne des valeurs mesurées.

4. Moulin de concassage humide (01) pour le concassage humide de malt de brasserie (02), avec un dispositif de trempage (06), dans lequel le malt de brasserie (02) peut être trempé dans l'eau et avec un agencement de rouleaux avec au moins deux rouleaux exprimeurs (09, 10) pouvant être entraînés qui forment une fente (13), entre lesquels le malt de brasserie (02) trempé peut être concassé par entraînement des rouleaux exprimeurs (09, 10),
**caractérisé en ce que**
entre les deux rouleaux exprimeurs (09,10), une largeur de fente inférieure à 0,3 mm est réglée et les rouleaux exprimeurs (09, 10) sont entraînés à une vitesse de rotation exactement identique.

5. Moulin de concassage humide selon la revendication 4,
**caractérisé en ce que**
pour la mesure de la largeur de fente, au moins un capteur est prévu.

6. Moulin de concassage humide selon la revendication 4 ou 5,
**caractérisé en ce que**
les deux rouleaux exprimeurs (09, 10) sont entraînés par un moteur d'entraînement (16), le mouvement d'entraînement du moteur d'entraînement étant transmis par l'intermédiaire d'une transmission distributrice (17) avec une vitesse de rotation exactement identique sur les deux rouleaux exprimeurs (09, 10).

7. Moulin de concassage humide selon la revendication 6,
**caractérisé en ce que**
le moteur d'entraînement (16) entraîne directement un rouleau exprimeur (09) et que le mouvement d'entraînement est transmis par l'intermédiaire de la transmission distributrice (17) du rouleau exprimeur directement entraîné (09) sur le second rouleau exprimeur (10).

8. Moulin de concassage selon la revendication 4 ou 5,
**caractérisé en ce que**
les deux rouleaux exprimeurs (09, 10) sont entraînés chacun par un moteur d'entraînement réglable (14, 15), la vitesse de rotation des deux rouleaux exprimeurs (09, 10) étant réglée à l'aide d'un dispositif de réglage exactement sur une valeur de consigne commune.
